# EUROPÄISCHE PATENTSCHRIFT

(11) **EP 3 772 050 B1**
(45) Veröffentlichungstag und Bekanntmachung des Hinweises auf die Patenterteilung: **11.09.2024**
(21) Anmeldenummer: 20184382.8
(22) Anmeldetag: 07.07.2020
(51) Int. Cl.: G08G 1/16, H04L 9/32, G06Q 20/32, G06Q 20/08, H04L 9/00, H04L 9/40, H04W 4/02, H04W 4/44

(54) **VERFAHREN ZUM DURCHFÜHREN EINER MANÖVERANFRAGE ZWISCHEN MINDESTENS ZWEI FAHRZEUGEN**
METHOD FOR PERFORMING A MANEUVER REQUEST BETWEEN AT LEAST TWO VEHICLES
PROCÉDÉ DE MISE EN UVRE D'UNE DEMANDE DE MAN UVRE ENTRE AU MOINS DEUX VÉHICULES

(30) Priorität: 01.08.2019 DE 102019211534
(43) Veröffentlichungstag der Anmeldung: 03.02.2021
(73) Patentinhaber: Robert Bosch GmbH, 70442 Stuttgart (DE)
(72) Erfinder: Focke, Thomas, 31180 Ahrbergen (DE); Mahmoud, Sameh Amr Hassanein, 31139 Hildesheim (DE); Arenskrieger, Rainer, 70193 Stuttgart (DE)

(56) Entgegenhaltungen:
- DE-A1- 102016 205 142
- US-A1- 2013 151 412
- US-A1- 2018 012 433
- US-A1- 2018 284 810
- US-A1- 2019 043 364

## Beschreibung

Die Erfindung betrifft ein Verfahren zum Durchführen einer Manöveranfrage, durch ein Steuergerät eines ersten Fahrzeugs, ein Verfahren zum Handhaben einer Manöveranfrage eines ersten Fahrzeugs, durch ein Steuergerät eines zweiten Fahrzeugs, sowie ein Steuergerät.

### Stand der Technik

Der gegenwärtige Verkehrsfluss im Straßenverkehr wird hauptsächlich durch starre Verkehrsregeln gesteuert. Zusätzlich zu den Verkehrsregeln werden weitere Hilfsmittel, wie beispielsweise Schilder und Lichtsignalanlagen für die Steuerung des Verkehrsflusses eingesetzt. Je nach Ausgestaltung kann ein Verkehrsgeschehen und insbesondere der Verkehrsfluss durch eine zentrale Leitstelle ausgewertet und zusätzliche Maßnahmen eingeleitet werden. Zu derartigen Maßnahmen kann das Freigeben zusätzlicher Fahrspuren oder Einrichten von Umleitungen gehören.

Des Weiteren kann eine individuelle Optimierung einer Routenführung von Fahrzeugen durch die Verwendung von Navigationssoftware realisiert werden. Dabei wird die Fahrtzeit für das Befahren einer Route, beispielsweise unter Einbeziehung des Verkehrs und temporärer Sperrungen, reduziert.

Eine holistische Optimierung einer Routenführung unter Einbeziehung der individuellen und damit der fahrzeugspezifischen Ziele ist bisher nicht umsetzbar, da die Vielzahl von Verkehrsteilnehmern die Komplexität der Berechnung einer derartigen Optimierung exponentiell erhöht.

Die DE 10 2016 205 142 A1 beschreibt ein Verfahren zum Initiieren eines kooperativen Fahrmanövers, wobei Fahrintentionsnachrichten für Fahrzeuge in der Umgebung eines Fahrzeugs bereitgestellt werden

Die US 2018/012433 A1 beschreibt ein Verfahren zum Authentifizieren eines Fahrzeugs gegenüber anderen Fahrzeugen oder gegenüber externen Servereinheiten. Die Authentifizierung des Fahrzeugs dient zur mobilen Aufladung des Fahrzeugs mit elektrischer Energie durch Oberleitungen oder durch andere Verkehrsteilnehmer.

Die US 2019/043364 A1 beschreibt ein Verfahren zum Ermöglichen eines Vorfahrtrechts zwischen einem Fahrzeug und Verkehrsteilnehmern. Durch eine fahrzeugseitige Sensorik werden Verkehrsteilnehmer detektiert, welche mit der Trajektorie des Fahrzeugs interferieren. Das Fahrzeug sendet an derartige Verkehrsteilnehmer Vergütungsangebote. Die Verkehrsteilnehmer können derartige Vergütungsangebote annehmen und dem Fahrzeug ein Vorfahrtsrecht gewähren.

### Offenbarung der Erfindung

Der Erfindung liegt die Aufgabe zugrunde, ein Verfahren zu schaffen, welches eine Routenführung von Fahrzeugen optimieren und eine Fahrtzeit zum Zurücklegen einer Route verringern kann.

Diese Aufgabe wird durch die im Anspruch 1, 6 und im Anspruch 9 angegebenen Merkmale gelöst. Weitere vorteilhafte Ausgestaltungen der Erfindung sind in den Unteransprüchen beschrieben.

Gemäß einem Aspekt der Erfindung wird ein Verfahren zum Durchführen einer Manöveranfrage durch ein Steuergerät eines ersten Fahrzeugs bereitgestellt.

In einem Schritt wird ein Kommunikationsbedarf durch Auswerten von Messdaten festgestellt. Ein derartiger Kommunikationsbedarf kann beispielsweise ortsabhängig oder abhängig von ausgewerteten Messdaten von Fahrzeugsensoren ermittelt werden. Des Weiteren kann der Kommunikationsbedarf anhand einer Verkehrssituation oder kartenbasiert festgestellt werden.

In einem weiteren Schritt wird ein Header mit statischen und dynamischen Informationen generiert und zusammen mit der Manöveranfrage versendet. Das Versenden der Manöveranfrage kann hierbei generell in alle Richtungen ausgehend von einer Kommunikationseinheit des ersten Fahrzeugs aus erfolgen. Abhängig von einer Sendeleistung der Kommunikationseinheit kann die Manöveranfrage in einem begrenzten Radius versendet werden. Das Steuergerät kann vorzugsweise mit einer derartigen Kommunikationseinheit verbindbar sein oder eine integrierte Kommunikationseinheit aufweisen. Die Manöveranfrage kann hierbei allgemein bzw. kurz geschildet sein. Beispielsweise kann hierbei ein Vorlassen des ersten Fahrzeugs durch das zweite Fahrzeug, ein Beschleunigen des zweiten Fahrzeugs und dergleichen als Manöveranfrage erfolgen.

Das mindestens eine zweite Fahrzeug kann die Manöveranfrage verarbeiten und anschließend eine Bestätigung einer Relevanz der Manöveranfrage, beispielsweise als Relevanzinformation, an das Steuergerät des ersten Fahrzeugs versenden, sodass diese vom zweiten Fahrzeug gesendete Bestätigung von dem Steuergerät des ersten Fahrzeugs empfangen wird. Hierbei kann beispielsweise ein Interesse bzw. eine Akzeptanz für die Manöveranfrage signalisiert werden.

In einem weiteren Schritt wird die Manöveranfrage als Angebot für eine Transaktion von dem ersten Fahrzeug an das zweite Fahrzeug übermittelt. Bei diesem Schritt wird die Manöveranfrage in einer detaillierten Form an das zweite Fahrzeug vom ersten Fahrzeug übermittelt, um eine genaue Ausführung bzw. Abstimmung mit dem zweiten Fahrzeug zu ermöglichen. Das zweite Fahrzeug kann hierbei das Angebot annehmen, ablehnen oder ein Gegenangebot erzeugen, welches durch das Steuergerät des ersten Fahrzeugs empfangbar ist.

Bei einer empfangenen Bestätigung des Angebots wird ein angefragtes Manöver ausgeführt. Das Manöver kann beispielsweise durch das erste Fahrzeug und/oder durch das zweite Fahrzeug ausgeführt werden. Alternativ oder zusätzlich kann statt dem zweiten Fahrzeug eine Vielzahl von Fahrzeugen die Manöveranfrage empfangen und auswerten.

Erfindungsgemäß werden bei dem Verfahren zum Durchführen einer Manöveranfrage die statischen Informationen und die dynamischen Informationen, insbesondere des ersten und des zweiten Fahrzeugs, dazu eingesetzt, einen privaten Schlüssel zum Empfangen und/oder Lesen der Manöveranfrage zu generieren. Bevorzugterweise wird aufgrund einer vom Steuergerät des ersten Fahrzeugs geforderten Position des zweiten Fahrzeugs ein korrekter privater Schlüssel durch das Steuergerät des zweiten Fahrzeugs generiert. Hierdurch kann nur das zweite Fahrzeug die geforderten Filterkriterien erfüllen und die Manöveranfrage entschlüsseln bzw. lesen und auswerten. Insbesondere kann das Steuergerät des zweiten Fahrzeugs nur daher die Filterkriterien erfüllen, weil das zweite Fahrzeug sich tatsächlich an der geforderten Position oder innerhalb eines geforderten Bereichs befindet. Die geforderte Position kann beispielsweise eine absolute Position, eine zum ersten Fahrzeug relative Position, ein Positionsbereich und dergleichen sein.

Durch das Verfahren kann eine dedizierte, spezifische Kommunikation zwischen zumindest zwei Fahrzeugen aufgebaut werden. Hierfür kann beispielsweise eine dedicated short range communication als Übertragungsstandard dienen. Bei dieser Broadcasting-Technologie werden die relevanten Informationen eines Fahrzeugs durch eine WLAN-Verbindung zwischen den Fahrzeugen übertragen.

Die Kommunikationsverbindung zwischen den Fahrzeugen kann insbesondere dazu eingesetzt werden, Vorfahrtsrechte zwischen mehreren Verkehrsteilnehmern zu klären, freiwerdende Parkplätze weiterzugeben und/oder Einfädelvorgänge zwischen mehreren Fahrzeugen abzustimmen. Als weitere Anwendungsszenarien für das Verfahren können beispielsweise spezifische Warnungen für Schwerlastwagen, Fahrzeuge mit einer Dachlast und damit einer größeren Fahrzeughöhe, für Aquaplaning anfällige Fahrzeuge, fahrzeugseitiges Ersuchen von Unterstützung, falls ein autonomes Fahrzeug sich in einer für sich aussichtslosen Situation befindet, und dergleichen berücksichtigt werden.

Der Auslöser eines Kommunikationsaufbaus zwischen zwei Fahrzeugen und damit auch der Manöveranfrage kann durch einen Interaktionsbedarf initiiert werden, welcher bei einem der beiden Fahrzeuge festgestellt wird. So kann beispielsweise festgestellt werden, dass ein zügiges Auffahren auf eine Schnellstraße notwendig ist, um zum vorherdefinierten Zeitpunkt ein Fahrtziel zu erreichen. Weiterhin kann durch das Steuergerät berücksichtigt werden, dass ein spezifisches Fahrzeug, welches durch die Umfeldsensorik wahrgenommen wird, dieses zügige Auffahren durch ein kooperatives Verhalten begünstigen kann, wenn es hierzu motiviert wird. Das angefragte Manöver kann vorzugsweise dazu dienen, ein Fahrtziel und/oder ein Komfortziel des ersten Fahrzeugs zu erreichen, wobei das zweite Fahrzeug entsprechend der Manöveranfrage kooperieren muss, damit das Fahrtziel und/oder das Komfortziel erreicht werden.

Der Header wird hierbei durch das erste Fahrzeug generiert, um einen oder mehrere Adressaten zu bestimmen. Die Informationen des Headers können hierzu statische Informationen, welche nur einmal für eine Anfrage bestimmt werden, und dynamische Informationen, welche sich kontinuierlich ändern können, aufweisen. Die dynamischen Informationen des Headers können beispielsweise einen Zeitstempel sowie einen Counter enthalten, über welchen ersichtlich ist, wie oft eine Nachricht, die sich auf eine spezifische Anfrage bezieht, schon versendet worden ist. Die statischen Informationen des ersten Fahrzeugs ändern sich vorzugsweise nicht und können daher dauerhaft in einer Datei gespeichert werden. Die dynamischen Informationen des ersten Fahrzeugs können beispielsweise aus der Odometrie bzw. mit Hilfe der Navigation bestimmt werden.

Gemäß einer vorteilhaften Ausgestaltung kann der Header unvollständig sein bzw. nicht alle Informationen enthalten, um eine gültige Anfrage zu versenden. Nachdem Befüllen des Nachrichten-Headers und der eigentlichen Nachricht der Manöveranfrage wird die Manöveranfrage über die Kommunikationsverbindung versendet. Die Kommunikationsverbindung kann hierbei auf einem WLAN bzw. DSRC, IEEE 802.11p und dergleichen Übertragungsstandard basieren.

Durch das Verfahren kann das erste Fahrzeug mit einem zweiten Fahrzeug bestimmte Manöver verhandeln und abstimmen, sodass das erste Fahrzeug, insbesondere bei veränderbaren oder auslegbaren Verkehrsregeln, zügiger oder komfortabler entlang seiner Route vorankommen kann. Die veränderbaren Verkehrsregeln können beispielsweise ein Anpassen von Vorfahrtsregeln an "rechts-vor-links" Kreuzungen, ein Befahren von roten Ampeln, ein Gewähren von Vorfahrten bei einer Einfahrt in eine Neben- auf Hauptstraße, ein mehrmaliges Durchfahren von Kreisverkehren zur Änderung der Reihenfolge einer Fahrzeugkolonne und dergleichen sein. Somit kann das Verfahren nicht nur für autonome oder teilautonome Fahrzeuge, sondern auch bei Rettungsfahrzeugen und Sonderfahrzeugen eingesetzt werden.

Nach einer vorteilhaften Ausführungsform wird der Kommunikationsbedarf durch mindestens einen Algorithmus oder mindestens ein neuronales Netzwerk festgestellt, welcher Messdaten von Fahrzeugsensoren auswertet. Hierdurch können bei einem festgestellten Kommunikationsbedarf Messdaten und Umfeldinformationen besonders effizient ausgewertet werden. Beispielsweise kann durch den mindestens einen Algorithmus und/oder das mindestens eine neuronale Netzwerk festgestellt werden, dass ein schnelles Auffahren auf eine Schnellstraße notwendig ist, um ein Fahrtziel und insbesondere eine Ankunftszeit einzuhalten. Der Kommunikationsbedarf kann alternativ oder zusätzlich situationsabhängig oder ortsabhängig bestimmt werden.

Ein Adressat für die Manöveranfrage kann besonders effizient ermittelt werden, wenn die statischen und dynamischen Informationen des Headers nur von mindestens einem zweiten Fahrzeug innerhalb eines relevanten Verkehrsbereichs als Filterkriterien zum Öffnen oder Abrufen der Manöveranfrage erfüllt werden. Hierdurch kann nur ein Fahrzeug oder eine begrenzte Anzahl von Fahrzeugen die Manöveranfrage empfangen, da nur diese den richtigen Header mit entsprechenden statischen und dynamischen Informationen als Schlüssel zum Öffnen der Manöveranfrage generieren können.

Den richtigen Schlüssel zum Öffnen der Manöveranfrage können diejenigen Fahrzeuge bzw. Verkehrsteilnehmer generieren, welche sich tatsächlich an einer geforderten Position befinden und die geforderten dynamischen Filterkriterien erfüllen können.

Bevorzugterweise kann die Kommunikationsverbindung zwischen den Fahrzeugen und insbesondere zwischen einer Positionsermittlungseinheit und einer Kommunikationseinheit gegen Manipulation von außen abgesichert sein.

Nach einem weiteren Ausführungsbeispiel enthält das Angebot für eine Transaktion eine Leistung des zweiten Fahrzeugs und eine Gegenleistung des ersten Fahrzeugs und wird an das zumindest eine zweite Fahrzeug übermittelt. Durch die Manöveranfrage kann das erste Fahrzeug beispielsweise versuchen, einen Vorteil im Verkehrsstrom gegenüber anderen Verkehrsteilnehmern zu erlangen. Dies kann das erste Fahrzeug durch eine gewünschte Leistung bzw. ein gewünschtes Manöver erlangen. Damit ein zweites Fahrzeug diese Leistung bzw. das Manöver ermöglicht oder sich hierbei kooperativ verhält, kann das erste Fahrzeug dem zweiten Fahrzeug eine Gegenleistung als Motivation anbieten. Dieses Vorgehen kann in einem oder in mehreren Verhandlungsschritten umgesetzt werden. Insbesondere können durch den Verhandlungsschritt Details der Manöveranfrage, wie beispielsweise das genaue Manöver, ein Preis, ein Zeitpunkt der Ausführung und dergleichen zwischen den beiden Fahrzeugen ausgetauscht und verhandelt werden. Hierbei kann auch eine Preisfindung über Algorithmen realisiert werden, welche die sich ergebenden Vorteile oder Nachteile der jeweiligen Fahrzeuge monetär bewerten. Beispielsweise kann eine Zeitersparnis von 30 Sekunden einen Gegenwert von 0,20€ aufweisen.

Als Leistung können beispielsweise ein Gewähren von einer Vorfahrt, ein Verzicht auf Vorfahrtsregeln, ein Anpassen einer Geschwindigkeit, ein Anhalten trotz grüner Ampelschaltung und dergleichen sein.

Die Gegenleistung für das angefragte Manöver kann Geld oder Werteinheiten, Windschattenfahrten, Guthaben für Leistungen und dergleichen verwendet werden.

Das Verfahren kann für das erste Fahrzeug besonders effizient umgesetzt werden, wenn bei mehreren zweiten Fahrzeugen jeweils ein Angebot für eine Transaktion an die Fahrzeuge übermittelt wird und eine Transaktion mit einem zweiten Fahrzeug von den mehreren Fahrzeugen basierend auf mindestens einem Kriterium ausgewählt und durchgeführt wird. Ein derartiger Fall kann beispielsweise bei einem Einfädeln oder einem Befahren einer nicht einsehbaren Kreuzung vorliegen. Hierzu kann jeweils ein Verkehrsbereich mit einer unbekannten Anzahl an Verkehrsteilnehmern als Adressat im Header bestimmt werden, sodass mehrere Fahrzeuge die Manöveranfrage empfangen und entziffern können. Bei einem derartigen Fall können mehrere Empfänger bzw. zweite Fahrzeuge auf eine Manöveranfrage antworten. Das erste Fahrzeug kann eine Erstanfrage verwerfen, je eine Session-ID anlegen und mehrere neue Anfragen starten, bei welchen es die empfangenen Attribute der Antworten der Fremdfahrzeuge bzw. zweiten Fahrzeuge nutzt, um diese Anfragen zu differenzieren. Es können hierzu die statischen Informationen der Fremdfahrzeuge in den jeweils neuen Nachrichtenheadern berücksichtigt werden.

Das mindestens eine Kriterium kann beispielsweise ein Preis bzw. Wert einer Gegenleistung, eine Zeitersparnis und dergleichen sein. Durch diese Maßnahme kann das erste Fahrzeug mehrere parallele Kommunikationsverbindungen herstellen und mehrere Manöveranfragen versenden, wobei anschließend eine Entscheidung für eines der Fahrzeuge und damit eine Transaktion mit einem bestimmten Fahrzeug anhand des Kriteriums gewählt wird.

Gemäß einem weiteren Aspekt der Erfindung wird ein Verfahren zum Handhaben einer Manöveranfrage eines ersten Fahrzeugs, insbesondere durch ein Steuergerät eines zweiten Fahrzeugs, bereitgestellt.

In einem Schritt wird eine von dem ersten Fahrzeug versendete Manöveranfrage durch das Steuergerät des zweiten Fahrzeugs empfangen. Es werden durch das Steuergerät des zweiten Fahrzeugs statische und dynamische Informationen des zweiten Fahrzeugs ermittelt und mit einem vom ersten Fahrzeug empfangenen Header der Manöverabfrage abgeglichen.

Die empfangene Manöveranfrage wird als relevant oder irrelevant bewertet. Eine als relevant bewertete Manöveranfrage wird dem ersten Fahrzeug bestätigt. Hierzu kann das Steuergerät des zweiten Fahrzeugs über eine Kommunikationsverbindung eine Nachricht an das Steuergerät des ersten Fahrzeugs versenden.

Eine detaillierte Manöveranfrage wird als ein Angebot des ersten Fahrzeugs für eine Verhandlung von dem zweiten Fahrzeug empfangen. In einem weiteren Schritt wird das Angebot durch das zweite Fahrzeug bestätigt oder abgelehnt. Bei einem Bestätigen des Angebots des ersten Fahrzeugs wird eine Transaktion zwischen dem ersten Fahrzeug und dem zweiten Fahrzeug durchgeführt und ein angefragtes Manöver des ersten Fahrzeugs durch das zweite Fahrzeug gewährt oder unterstützt. Hierbei kann insbesondere eine im Angebot des ersten Fahrzeugs vorgeschlagene Gegenleistung vom zweiten Fahrzeug empfangen und die im Angebot geforderte Leistung des zweiten Fahrzeugs durch das zweite Fahrzeug ausgeführt werden.

Erfindungsgemäß werden bei dem Verfahren zum Handhaben einer Manöveranfrage die statischen Informationen und die dynamischen Informationen, insbesondere des ersten und des zweiten Fahrzeugs, dazu eingesetzt, einen privaten Schlüssel zum Empfangen und/oder Lesen der Manöveranfrage zu generieren. Bevorzugterweise wird aufgrund einer vom Steuergerät des ersten Fahrzeugs geforderten Position des zweiten Fahrzeugs ein korrekter privater Schlüssel durch das Steuergerät des zweiten Fahrzeugs generiert. Hierdurch kann nur das zweite Fahrzeug die geforderten Filterkriterien erfüllen und die Manöveranfrage entschlüsseln bzw. lesen und auswerten. Insbesondere kann das Steuergerät des zweiten Fahrzeugs nur daher die Filterkriterien erfüllen, weil das zweite Fahrzeug sich tatsächlich an der geforderten Position oder innerhalb eines geforderten Bereichs befindet. Die geforderte Position kann beispielsweise eine absolute Position, eine zum ersten Fahrzeug relative Position, ein Positionsbereich und dergleichen sein.

Durch das Verfahren kann ein fremdfahrzeugseitiger Abschnitt einer Manöveranfrage abgewickelt werden. Hierzu kann die empfangene Manöveranfrage bewertet und anschließend für eine eventuelle Transaktion vorbereitet werden. Hierzu wird das erste Fahrzeug über die Relevanz der Manöveranfrage benachrichtigt und zum Versenden weiterer Details angewiesen. Die Relevanz der Manöveranfrage kann vorzugsweise in Form von Relevanzinformation übermittelt werden. Die Relevanzinformation können technische Informationen und/oder Daten umfassen, welche als Auslöser zum Versenden der weiteren Details bzw. Detaildaten dienen.

Insbesondere kann durch das Verfahren eine Manöveranfrage in Form einer Verhandlung mit einer Leistung und einer Gegenleistung realisiert werden, wobei die Leistung des zweiten Fahrzeugs in Form einer Handlung oder einer Unterlassung einer Handlung ausgestaltet sein kann. Beispielsweise kann das zweite Fahrzeug gegen ein Entgelt das erste Fahrzeug trotz gegensätzlicher Verkehrsregeln vorlassen und dem ersten Fahrzeug ein schnelleres Vorankommen ermöglichen.

Nach einem Ausführungsbeispiel wird eine als irrelevant bewertete Manöveranfrage abgelehnt. Hierzu kann eine Ablehnungsnachricht an das anfragende erste Fahrzeug versendet werden, um weitere Anfragen obsolet zu machen. In dieser Nachricht kann auch eine Begründung für die Ablehnung enthalten sein. Hierdurch können weitere Manöveranfragen des ersten Fahrzeugs unterbunden werden.

Die Manöveranfrage und die hieraus resultierende Transaktion zwischen den Fahrzeugen können besonders sicher ausgeführt sein, wenn die Transaktion zwischen dem ersten Fahrzeug und dem zweiten Fahrzeug blockchainbasiert verifiziert oder als eine Blockchain ausgeführt wird.

Dezentrale Transaktionssysteme wie beispielsweise die Blockchain-Technologie erlauben das Dokumentieren von Transaktionen in einer chronologischen Abfolge ohne die Notwendigkeit einer zentralen Instanz. Weiter ist bei der Verwendung von entsprechenden kryptografischen Algorithmen, wie beispielsweise bei der Blockchain implementiert, keine nachträgliche Manipulation der Daten möglich. Über digitale Verträge bzw. sogenannte Smart Contracts können geschäftliche Vorgänge zwischen mehreren Parteien abgebildet werden.

Die Verkehrsteilnehmer bzw. das erste und das zweite Fahrzeug kommen dabei mit Hilfe eines Kommunikationsprotokolls der Kommunikationsverbindung und einer notariellen Instanz zu einer Übereinkunft, welche Regeln wann gelten, und welcher Verkehrsteilnehmer wann fahren darf. Die Verkehrsregeln können hierbei vorzugsweise durch die beiden Fahrzeuge derart veränderbar sein, dass andere Verkehrsteilnehmer nicht beeinträchtigt oder nicht gefährdet werden.

Gemäß einer weiteren Ausführungsform wird die Transaktion fahrzeugextern dezentral ausgeführt und/oder verifiziert. Durch diese Maßnahme kann die Sicherheit der Transaktion zusätzlich erhöht werden.

Nach einem weiteren Aspekt der Erfindung wird ein Steuergerät bereitgestellt, welches dazu eingerichtet ist, zumindest eines der erfindungsgemäßen Verfahren auszuführen. Das Steuergerät kann ein fahrzeugseitiges Steuergerät des ersten Fahrzeugs und/oder des zweiten Fahrzeugs sein. Des Weiteren kann das Steuergerät eine Kommunikationseinheit zum Herstellen einer Kommunikationsverbindung aufweisen oder mit einer derartigen Kommunikationseinheit verbindbar sein.

Da eine Nicht-Bekanntmachung neuer bzw. erneuerter Kommunikationsmechanismen dazu führen kann, dass das erste Fahrzeug keine Kommunikationspartner findet, können die Verfahren vorzugsweise in Form einer Standarisierung ausgeführt sein. Jeder Kommunikationspartner, der adressierbar ist, kann hierdurch einen entsprechenden Standard in seinem entsprechenden Steuergerät implementieren.

Nachstehend werden mehrere Ausführungsbeispiele der Erfindung anhand der Zeichnungen näher erläutert. Es zeigen:
- Fig. 1: eine schematische Draufsicht auf eine Verkehrssituation, bei welcher ein Verfahren gemäß einer Ausführungsform der Erfindung anwendbar ist,
- Fig. 2: eine schematische Draufsicht auf eine weitere Verkehrssituation, bei welcher das Verfahren gemäß einer Ausführungsform der Erfindung anwendbar ist,
- Fig. 3: eine schematische Draufsicht auf eine weitere Verkehrssituation, bei welcher das Verfahren gemäß einer Ausführungsform der Erfindung anwendbar ist,
- Fig. 4: ein schematisches Ablaufdiagramm zum Veranschaulichen des Verfahrens gemäß einer Ausführungsform der Erfindung, und
- Fig. 5: eine schematische Darstellung eines Headers mit statischen und dynamischen Informationen.

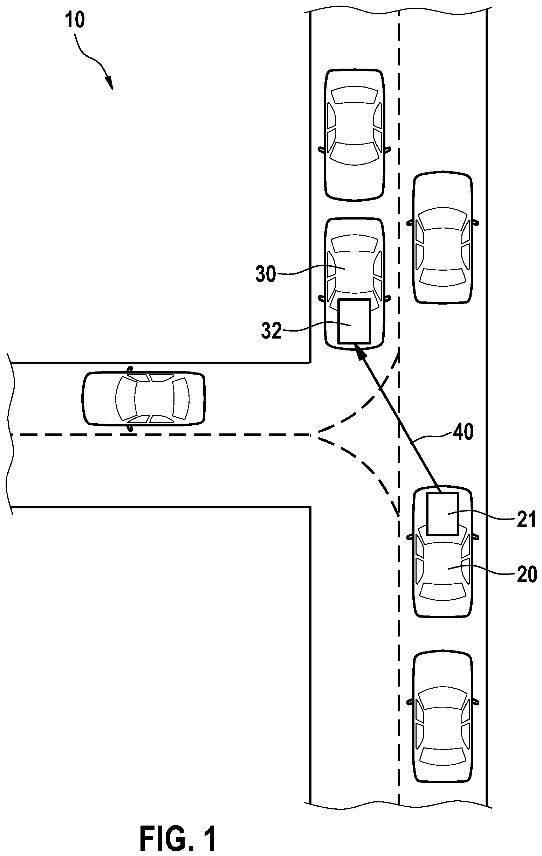

In der Fig. 1 ist eine schematische Darstellung eines Systems gemäß einer ersten Ausführungsform der Erfindung zum Veranschaulichen einer Lernphase gezeigt. Insbesondere wird durch die Figuren 1 bis 3 das erfindungsgemäße Verfahren verdeutlicht.

Die Fig. 1 zeigt eine schematische Draufsicht auf eine Verkehrssituation 10, bei welcher ein Verfahren 100 gemäß einer Ausführungsform der Erfindung anwendbar ist.

Die Verkehrssituation 10 bzw. das Verkehrsszenario zeigen eine Kreuzung, an welcher ein erstes Fahrzeug 20 und ein zweites Fahrzeug 30 eine Kommunikationsverbindung 40 herstellen. Der Pfeil veranschaulicht hierbei die Kommunikationsverbindung 40 und eine Richtung einer Manöveranfrage.

Das zweite Fahrzeug 30 weist in der dargestellten Verkehrssituation 10 ein Vorfahrtsrecht auf. Das erste Fahrzeug 20 versucht durch die Manöveranfrage über die Kommunikationsverbindung 40 über eine Transaktion das Vorfahrtsrecht des zweiten Fahrzeugs 30 zu erlangen, sodass das erste Fahrzeug 20 durch das zweite Fahrzeug 30 vorgelassen wird.

Das erste Fahrzeug 20 weist ein Steuergerät 21 auf, welches dazu eingerichtet ist, die Kommunikationsverbindung 40 mit einem Steuergerät 32 des zweiten Fahrzeugs 30 herzustellen.

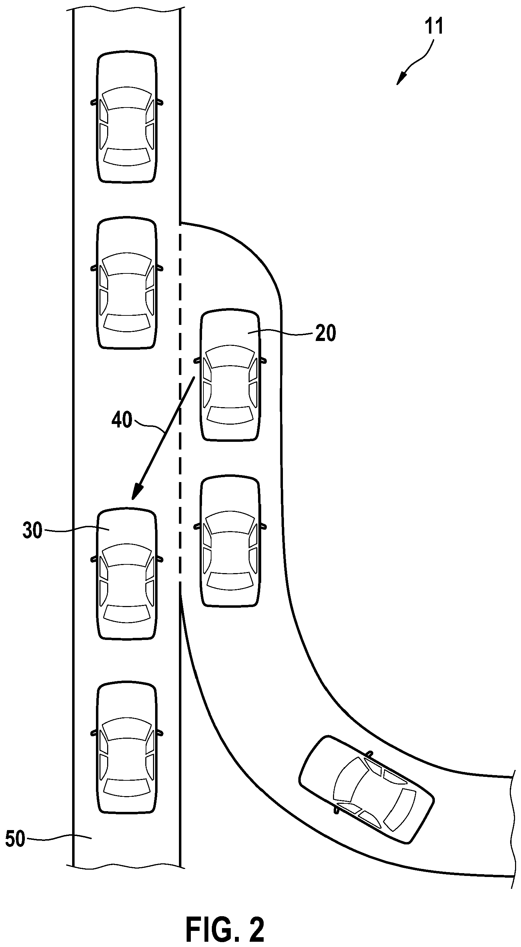

Die Fig. 2 zeigt eine schematische Draufsicht auf eine weitere Verkehrssituation 11, bei welcher das Verfahren 100 anwendbar ist. Die Verkehrssituation 11 zeigt hierbei eine Auffahrt auf eine Fahrspur 50.

Zum Ermöglichen eines uneingeschränkten Einfädelvorgangs des ersten Fahrzeugs 20 wird über die Kommunikationsverbindung 40 eine Manöveranfrage übermittelt, in welcher das zweite Fahrzeug 30 dem ersten Fahrzeug 20 den Spurwechsel ermöglichen kann.

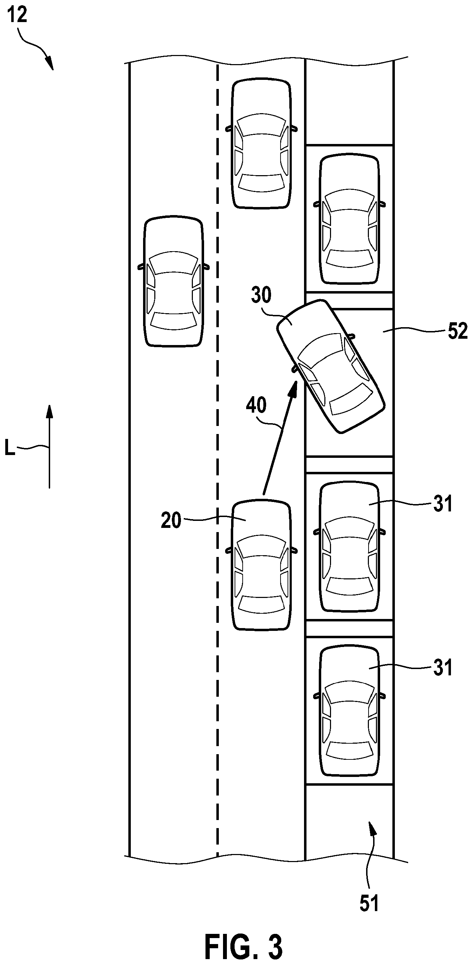

Die Fig. 3 veranschaulicht in einer schematischen Draufsicht eine weitere Verkehrssituation 12, bei welcher das Verfahren 100 anwendbar ist. Gemäß der dargestellten Ausführungsform ist in Längsrichtung L ein Parkplatz 51 angeordnet.

Das erste Fahrzeug 20 kann eine Manövrieranfrage über die Kommunikationsverbindung 40 versenden, auf welche nur parkende Fahrzeuge 31 antworten können, da ein Header der Manöveranfrage dynamische Informationen mit einer Position des Parkplatzes 51 aufweist und somit nur parkende Fahrzeuge 31 die Manöveranfrage entziffern bzw. verwerten können.

Gemäß dem Ausführungsbeispiel ist das zweite Fahrzeug 30 kurz davor, seinen Abstellplatz 52 zu verlassen und kann somit auf die Manöveranfrage reagieren, um dem ersten Fahrzeug 20 ein zügiges Finden eines Abstellplatzes 52 innerhalb des Parkplatzes 51 zu ermöglichen.

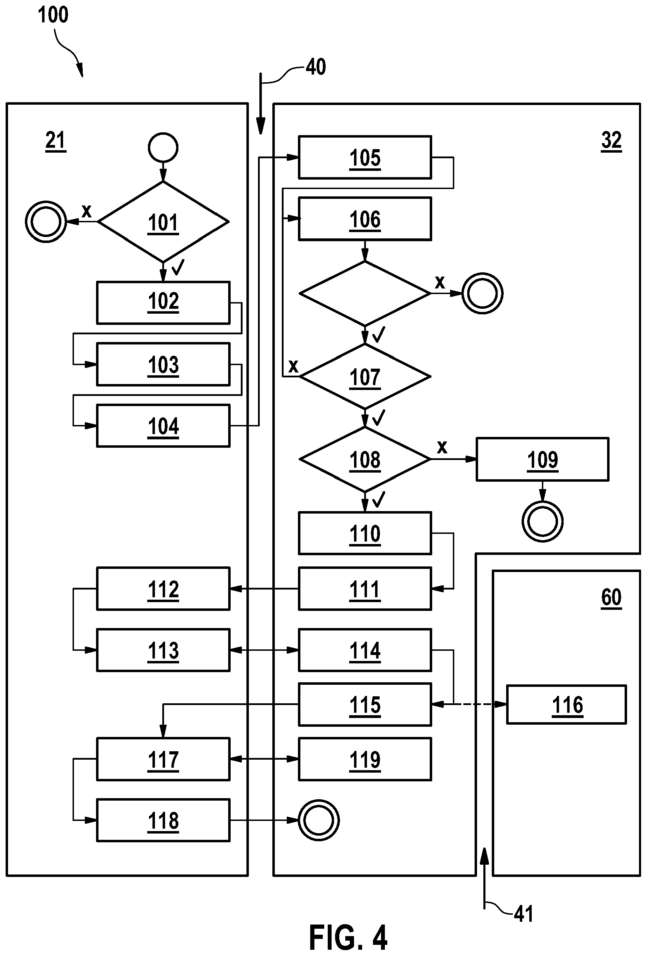

In der Fig. 4 ist ein schematisches Ablaufdiagramm zum Veranschaulichen des Verfahrens 100 gemäß einer Ausführungsform der Erfindung dargestellt. Insbesondere werden Verfahrensabläufe innerhalb des Steuergeräts 21 des ersten Fahrzeugs 20 und innerhalb des Steuergeräts 32 des zweiten Fahrzeugs 30 dargestellt. Die Steuergeräte 21, 32 sind hierbei durch die Kommunikationsverbindung 40 drahtlos datenleitend miteinander verbunden. Über eine weitere Kommunikationsverbindung 41 kann das Steuergerät 32 des zweiten Fahrzeugs 30 eine Verbindung zu einer fahrzeugexternen Steuereinheit 60 herstellen.

In einem ersten Schritt 101 wird ein Auslöser der Kommunikationsverbindung 40 zwischen den Fahrzeugen 20, 30 ermittelt. Der Kommunikationsbedarf bzw. Interaktionsbedarf kann bei einem der beiden Fahrzeuge 20, 30 festgestellt werden. Die Feststellung 101 des Bedarfs kann beispielsweise durch Algorithmen erfolgen, welche Informationen eines Fahrzeugumfelds auswerten. So kann beispielsweise ein baldiges Auffahren auf eine Schnellstraße 50 berechnet werden, um zum vorherdefinierten Zeitpunkt ein Fahrtziel zu erreichen. Weiterhin kann durch das Steuergerät 21 festgestellt werden, dass ein spezifisches Fahrzeug 30, welches beispielsweise durch eine Umfeldsensorik des ersten Fahrzeugs 20 wahrgenommen wird, dieses baldige Auffahren begünstigen kann. Ein derartiges Verkehrsszenario 11 ist in der Fig. 2 veranschaulicht.

Gemäß dem dargestellten Ausführungsbeispiel sind die Anfangsbedingungen für den Aufbau der Kommunikationsverbindung 40 erfüllt. In einem weiteren Schritt 102 werden die Informationen, welche zum Kommunikationsaufbau 40 mit dem identifizierten Fahrzeug 30 notwendig sind, gesammelt. Diese Informationen können alle Informationen umfassen, die der gegenseitigen Identifikation dienen können.

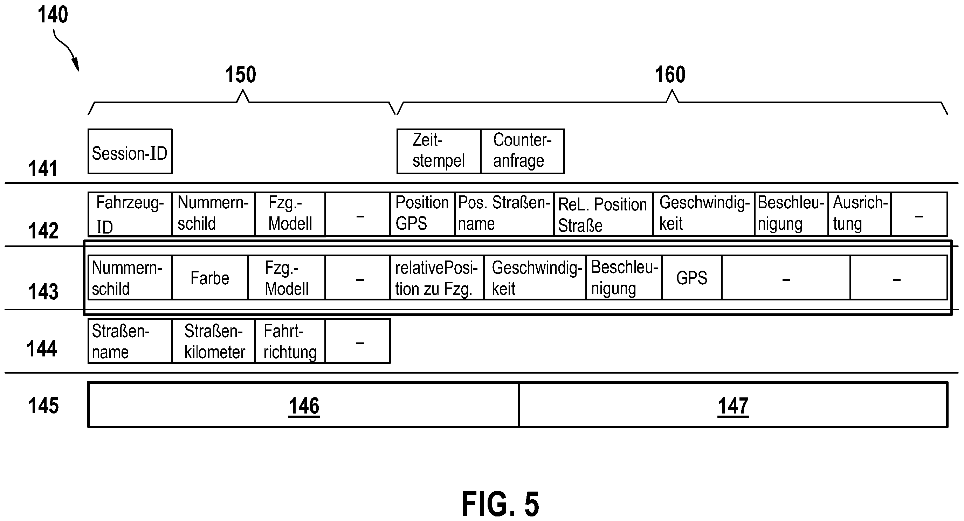

Im Rahmen der Informationssammlung wird auch ein Header 140 erstellt 103. Die Informationen des Headers können statische Informationen 150, welche nur einmal für eine Anfrage bestimmt werden müssen, und dynamische Informationen 160 umfassen, welche sich kontinuierlich ändern können. Ein derartiger Header 140 ist in der Figur 5 beispielhaft dargestellt.

Der Header 140 kann beispielsweise Metainformationen 141, wie beispielsweise eine statische Session-ID, einen dynamischen Zeitstempel oder eine dynamische Counteranfrage aufweisen.

Des Weiteren kann der Header 140 vom ersten Fahrzeug 20 gesammelte Informationen 142 über das erste Fahrzeug 20 und Informationen 143 über das Empfängerfahrzeug bzw. das zweite Fahrzeug 30 aufweisen. Derartige Informationen 142, 143 können beispielsweise Fahrzeug-IDs, Nummernschilder, Fahrzeugmodelle, GNSS-Positionen, Straßenabschnitte oder Kartenabschnitte, relative Positionen, Geschwindigkeiten, Beschleunigungen, Ausrichtung und dergleichen beinhalten.

Als weitere Bestandteile des Headers 140 kann ein relevanter Verkehrsraum 144 sowie die Manöveranfrage 145 eingesetzt werden. Der Verkehrsraum 144 kann als ein Straßenname, ein Straßenkilometer, eine Fahrtrichtung und dergleichen ausgestaltet sein. Die Manöveranfrage 145 kann die gewünschte Leistung 146 des zweiten Fahrzeugs 30, wie beispielsweise Vorfahrt gewähren oder Abstellfläche 52 freigeben, sowie Detailinformationen zur Gegenleistung 147 beinhalten.

Für eine Schlüsselgenerierung bzw. die Erstellung 103 des Headers 140 sind im Wesentlichen die Empfängerinformationen 143 notwendig.

Die Session-ID kann als ein Werkzeug zur einfachen Trennung des Nachrichtenverkehrs angelegt werden. Diese muss derart generiert werden, dass es nur in seltensten Fällen zu zufällig gleichen IDs kommt. Bei einer zufälligen ID in einem ausreichen großen Zahlenraum ist dies gewährleistet. Die dynamischen Metainformationen 160 des Headers 140 können einen Zeitstempel sowie einen Counter aufweisen, über den ersichtlich ist, wie oft eine Nachricht, die sich auf eine spezifische Anfrage bezieht, schon versendet worden ist.

Die statischen Informationen 150 des anfragenden bzw. ersten Fahrzeugs 20 ändern sich nie und können daher dauerhaft in einer Datei gespeichert werden. Die dynamischen Informationen 160 des ersten Fahrzeugs 20 können beispielsweise aus einer Odometrie oder mit Hilfe einer Navigation bestimmt werden.

Für das zweite Fahrzeug gibt es, solange dieselbe Anfrage versendet wird, auch statische Anteile, die jedoch über eine Umfeldsensorik einmal bestimmt werden müssen. Hierzu kann ein Fahrzeugmodell, eine Fahrzeugfarbe, ein Nummernschild und dergleichen gehören. Als ein Teil der statischen Informationen 150 kann auch die Benennung des relevanten Straßenbereichs 144 dienen. Dies ist insbesondere dann relevant, wenn durch Verdeckung oder verbleibenden Abstand zum relevanten Bereich noch kein konkretes Fahrzeug 30 identifiziert wurde. Da die statischen Informationen 150 nicht alle vorliegenden Informationen für eine eindeutige Identifikation aufweisen können, weist der Header 140 auch die dynamischen Informationen 160 über das Fremdfahrzeug 30 auf. Die dynamischen Informationen 160 des Fremdfahrzeugs 30 können über eine Fahrzeugsensorik geschätzt werden und entweder relativ zur Position des ersten Fahrzeugs 20 oder umgerechnet in GNSS-Koordinaten bereitgestellt.

Der Header 140 muss hierbei nicht alle Informationen umfassen, um eine gültige Anfrage zu versenden 104. Eine Authentifizierung der versendeten Nachricht und damit die Sicherstellung, dass der Sender 21 befugt ist, Nachrichten zu versenden und dass diese nicht manipuliert sind, kann ein entsprechendes Funkprotokoll übernehmen.

Das Steuergerät 32 des zweiten Fahrzeugs 30 oder mehrere Fahrzeuge 30 können die versendete Manöveranfrage empfangen 105. In jedem Empfänger der Nachricht und damit optional in mehreren Fahrzeugen 30 wird die Nachricht dekodiert. Dabei werden die einzelnen im Header 140 enthaltenen Informationen 141-145 abgeglichen 106.

Da der Abgleich 106 der Attribute unterschiedlich komplex ist, werden im ersten Schritt die statischen Empfänger-Informationen 150 abgeglichen. Dieser Abgleich kann in einer niedrigen Kommunikationsschicht erfolgen, da der Headerinhalt nur mit einem statischen fahrzeugspezifischen Header abgeglichen wird.

Wenn ein Attribut im Header 140 befüllt ist, wie beispielsweise ein Nummernschild C-AB-1234, kann dessen Bitkodierung mit einer internen Kodierung des Nummernschilds abgeglichen werden. Da nicht alle Attribute des Headers 140 befüllt sein müssen, kann auch im Falle eines Nicht-Vorliegens von Informationen davon ausgegangen werden, dass eine Übereinstimmung bestehen könnte, wobei die restlichen Attribute dennoch abgeglichen 107 werden.

Wenn die statischen Informationen 150 identisch sind, werden die dynamischen Informationen 160 und die Verkehrsrauminformationen 144 auf einer Applikationsebene abgeglichen. Für diesen Abgleich 106 wird auf Seiten des Steuergeräts 32 des zweiten Fahrzeugs 30 mit Hilfe von Umfeldsensorik, Odometrie und Navigationsinformationen zunächst bestimmt, ob sich das zweite Fahrzeug 30 im korrekten Verkehrsraum befindet und die dynamischen Informationen des zweiten Fahrzeugs 30 näherungsweise mit den dynamischen Informationen 160 des Headers 140 übereinstimmen. Hierbei kann eine Fehlertoleranz berücksichtigt werden, da die Informationen 150, 160 des Headers 140 auf einer fehlerbehafteten Messung aus einem vergangenen Zeitpunkt basieren. In einem weiteren optionalen Schritt der Headerverarbeitung kann mit Hilfe der Umfeldsensorik des zweiten Fahrzeugs 30 das erste Fahrzeug 20 identifiziert werden.

Gemäß dem dargestellten Ausführungsbeispiel treffen alle im Header 140 enthaltenen Informationen zu. Es wird somit im nächsten Schritt die empfangene Manöveranfrage als relevant oder irrelevant bewertet 108. Hierbei werten die Algorithmen des Steuergeräts 32 des zweiten Fahrzeugs 30 aus, ob die Manöveranfrage relevant ist und inwiefern sich Vorteile durch die Bestätigung der Manöveranfrage bzw. eines dazugehörigen Angebots ergeben. Wenn dies der Fall ist, wird die Session ID der Manöveranfrage übernommen 110, um die Kommunikation zwischen dem Steuergerät 21 des ersten Fahrzeugs 20 und dem Steuergerät 32 des zweiten Fahrzeugs 30 zu erleichtern.

Falls die Manöveranfrage nicht relevant ist, wird diese in einem Schritt 109 des Verfahrens 100 abgelehnt. Die Ablehnung kann auch eine Begründung enthalten. Eine als relevant bewertete Manöveranfrage wird dem Steuergerät 21 des ersten Fahrzeugs 20 bestätigt 111. Diese Bestätigung kann über die Kommunikationsverbindung 40 von dem Steuergerät 21 des ersten Fahrzeugs 20 empfangen 112 werden. In einem anschließenden Verhandlungsschritt 113, 114 werden die Details des Angebots, wie beispielsweise genaues Manöver, ein Preis, ein Zeitpunkt der Ausführung und dergleichen zwischen den Steuergeräten 21, 32 der beiden Fahrzeuge 20, 30 verhandelt. Die Preisfindung kann beispielsweise durch einen Algorithmus erfolgen, welcher die sich ergebenden Vorteile oder Nachteile der jeweiligen Fahrzeuge 20, 30 monetär bewertet.

Je nach Ausgestaltung kann eine weitere Aufrechterhaltung der Kommunikationsverbindung 40 zwischen den Steuergeräten 21, 32 der Fahrzeuge 20, 30 auch verschlüsselt erfolgen, um zu verhindern, dass alle anderen Verkehrsteilnehmer die genauen Umstände und Intentionen der involvierten Fahrzeuge 20, 30 erfahren. Hierzu kann für eine Verschlüsselung der Kommunikationsverbindung 40 ein asymmetrisches Verschlüsselungsverfahren verwendet werden. Ein privater Schlüssel für das Verschlüsselungsverfahren kann beispielsweise aus den zuvor verwendeten dynamischen Informationen 160, wie relative Position der Fahrzeuge 20, 30 zueinander, Verkehrsraum, Fahrzeugausrichtung, Beschleunigung und dergleichen, generiert werden. Da die Schätzung der dynamischen Informationen 160 fehlerbehaftet ist, kann eine Toleranzschwelle bei der Schlüsselgenerierung berücksichtigt werden. Diese kann durch Reduzierung einer Auflösung der Eingangsparameter erzielt werden oder durch eine entsprechende Nichtberücksichtigung von unteren Bits im Header 140.

Besonders vorteilhaft ist bei dem Verfahren 100, dass nur das zweite Fahrzeug 30 den richtigen privaten Schlüssel generieren kann, da das zweite Fahrzeug 30 sich tatsächlich an einer geforderten Position befindet und die geforderten dynamischen Informationen 160 und damit Filterkriterien erfüllen kann.

Bei einem automatisierten Fahren mit einer hochgenauen Lokalisierung mit einer Genauigkeit von +/- 0,2 m kann die geometrische Auflösung des privaten Schlüssels derart klein gewählt werden, dass auch Fahrzeuge 31 neben dem zweiten Fahrzeug 30 die Manöveranfrage nicht dekodieren können.

Wenn eine Einigung bei der Verhandlung 114 erzielt ist, können die beiden Fahrzeuge 20, 30 den Vertrag bestätigen 115. Die Bestätigung 115 kann in einer weiteren Instanz 60 verifiziert 116 werden. Dies kann durch eine externe Steuereinheit 60 erfolgen, welche als ein "Notar" fungiert und die Konditionen des Vertrags in einem dezentralen Transaktionsnetzwerk sichert. Die externe Servereinheit 60 kann vorzugsweise als eine Blockchain ausgeführt sein. Somit können bei Auftreten von Problemen, beispielsweise durch einen Unfall, die Vertragskonditionen nicht-manipulierbar vorliegen.

In einem weiteren Schritt 117 wird das angefragte Manöver ausgeführt, wobei die Erfüllung des Vertrags nach der Ausführung bestätigt 118 wird. Ein Gewähren des Manövers 119 durch das zweite Fahrzeug 30 kann beispielsweise als Leistung des Vertrags ausgestaltet sein, welches durch eine Gegenleistung, wie beispielsweise Geld, entlohnt wird.

## Patentansprüche

1. Verfahren (100) zum Durchführen einer Manöveranfrage (145), durch ein Steuergerät (21) eines ersten Fahrzeugs (20), wobei
- ein Kommunikationsbedarf (101) durch Auswerten von Messdaten festgestellt wird,
- ein Header (140) mit statischen Informationen (150) und dynamischen Informationen (160) generiert (103) und zusammen mit der Manöveranfrage (145) versendet (104) wird,
- **dadurch gekennzeichnet, dass** die Manöveranfrage in detaillierter Form (145) als Angebot für eine Transaktion (113) von dem ersten Fahrzeug (20) an das zweite Fahrzeug (30) übermittelt wird,
- bei einer empfangenen Bestätigung (115) des Angebots ein angefragtes Manöver ausgeführt (117) wird,
und dass die statischen Informationen (150) und die dynamischen Informationen (160) dazu eingesetzt werden, einen privaten Schlüssel zum Empfangen und/oder Lesen der Manöveranfrage (145) zu generieren,
wobei basierend auf einer vom Steuergerät (21) des ersten Fahrzeugs (20) geforderten Position des zweiten Fahrzeugs (30) ein korrekter privater Schlüssel durch das Steuergerät (32) des zweiten Fahrzeugs (30) generiert wird.

2. Verfahren nach Anspruch 1, wobei der Kommunikationsbedarf (101) durch mindestens einen Algorithmus oder mindestens ein neuronales Netzwerk festgestellt wird, welche Messdaten von Fahrzeugsensoren auswerten.

3. Verfahren nach Anspruch 1 oder 2, wobei die statischen Informationen (150) und die dynamischen Informationen (160) des Headers (140), insbesondere des ersten Fahrzeugs (20) und des zweiten Fahrzeugs (30), nur von mindestens einem zweiten Fahrzeug (30) innerhalb eines relevanten Verkehrsbereichs (144) als Filterkriterien zum Öffnen oder Abrufen der Manöveranfrage (145) erfüllt werden.

4. Verfahren nach einem der Ansprüche 1 bis 3, wobei das Angebot für eine Transaktion (113) eine Leistung (146) des zweiten Fahrzeugs (30), beispielsweise in Form eines durch das zweite Fahrzeug (30) ausgeführten Manövers, und eine Gegenleistung (147) des ersten Fahrzeugs (20), beispielsweise in Form einer an das zweite Fahrzeug (30) übermittelten Vergütung, enthält und an das zumindest eine zweite Fahrzeug (30) übermittelt wird.

5. Verfahren nach einem der Ansprüche 1 bis 4, wobei bei mehreren zweiten Fahrzeugen (30, 31) jeweils ein Angebot (113) für eine Transaktion an die Fahrzeuge (30, 31) übermittelt wird und eine Transaktion (114) mit einem zweiten Fahrzeug (30) von den mehreren Fahrzeugen (30, 31) basierend auf mindestens einem Kriterium ausgewählt und durchgeführt wird.

6. Verfahren (100) zum Handhaben einer Manöveranfrage (145) eines ersten Fahrzeugs (20), durch ein Steuergerät (32) eines zweiten Fahrzeugs (30), wobei
- eine von dem ersten Fahrzeug (20) versendete Manöveranfrage (145) durch das Steuergerät (32) des zweiten Fahrzeugs (30) empfangen (105) wird,
- statische Informationen (150) und dynamische Informationen (160) des zweiten Fahrzeugs (30) ermittelt und mit einem Header (140) der vom ersten Fahrzeug (20) empfangenen Manöverabfrage abgeglichen (106, 107) werden,
- die empfangene Manöveranfrage (145) als relevant oder irrelevant bewertet (108) wird,
- eine als relevant bewertete Manöveranfrage (145) dem ersten Fahrzeug (20) bestätigt (111) wird,
- **dadurch gekennzeichnet, dass** die Manöveranfrage in detaillierter Form (145) als Angebot für eine Verhandlung (113) von dem zweiten Fahrzeug (30) empfangen wird,
- das Angebot durch das zweite Fahrzeug (30) bestätigt oder abgelehnt (114) wird,
- bei einem Bestätigen (115) des Angebots des ersten Fahrzeugs (20) durch das zweite Fahrzeug (30) eine Gegenleistung, beispielsweise in Form einer Transaktion eines Zahlungsmittelszwischen dem ersten Fahrzeug (20) und dem zweiten Fahrzeug (30), durch das zweite Fahrzeug (30) empfangen und ein angefragtes Manöver des ersten Fahrzeugs (20) durch das zweite Fahrzeug (30) gewährt oder unterstützt (117) wird,
und dass die statischen Informationen (150) und die dynamischen Informationen (160) dazu eingesetzt werden, einen privaten Schlüssel zum Empfangen und/oder Lesen der Manöveranfrage (145) zu generieren,
wobei basierend auf einer vom Steuergerät (21) des ersten Fahrzeugs (20) geforderten Position des zweiten Fahrzeugs (30) ein korrekter privater Schlüssel durch das Steuergerät (32) des zweiten Fahrzeugs (30) generiert wird.

7. Verfahren nach Anspruch 6, wobei eine als irrelevant bewertete Manöveranfrage (145) abgelehnt (109) wird, und/oder die Transaktion zwischen dem ersten Fahrzeug (20) und dem zweiten Fahrzeug (30) blockchainbasiert verifiziert (116) oder als eine Blockchain ausgeführt wird.

8. Verfahren nach einem der Ansprüche 6 oder 7, wobei die Transaktion in einer fahrzeugexternen Servereinheit (60) dezentral ausgeführt und/oder verifiziert wird.

9. Steuergerät (21, 32), wobei das Steuergerät (21, 32) dazu eingerichtet ist, das Verfahren gemäß einem der Ansprüche 1 bis 5 oder das Verfahren gemäß einem der Ansprüche 6 bis 8 auszuführen.

## Claims

1. Method (100) for making a manoeuvre request (145), by way of a control unit (21) of a first vehicle (20), wherein
- a communication requirement (101) is identified by evaluating measurement data,
- a header (140) containing static information (150) and dynamic information (160) is generated (103) and sent (104) together with the manoeuvre request (145),
- **characterized in that** the manoeuvre request is transmitted from the first vehicle (20) to the second vehicle (30) in detailed form (145) as an offer of a transaction (113),
- receipt of confirmation (115) of the offer results in a requested manoeuvre being performed (117),
and **in that** the static information (150) and the dynamic information (160) are used to generate a private key for receiving and/or reading the manoeuvre request (145), a position of the second vehicle (30) called for by the control unit (21) of the first vehicle (20) being taken as a basis for a correct private key being generated by way of the control unit (32) of the second vehicle (30).

2. Method according to Claim 1, wherein the communication requirement (101) is identified by at least one algorithm or at least one neural network, which evaluate measurement data from vehicle sensors.

3. Method according to Claim 1 or 2, wherein the static information (150) and the dynamic information (160) of the header (140), in particular of the first vehicle (20) and of the second vehicle (30), are implemented as filter criteria for opening or retrieving the manoeuvre request (145) only by at least one second vehicle (30) within a relevant traffic area (144).

4. Method according to one of Claims 1 to 3, wherein the offer of a transaction (113) contains a service (146) from the second vehicle (30), for example in the form of a manoeuvre performed by the second vehicle (30), and a reward (147) from the first vehicle (20), for example in the form of a recompense transmitted to the second vehicle (30), and is transmitted to the at least one second vehicle (30).

5. Method according to one of Claims 1 to 4, wherein multiple second vehicles (30, 31) result in an offer (113) of a transaction being transmitted to each of the vehicles (30, 31) and a transaction (114) with one second vehicle (30) of the multiple vehicles (30, 31) being selected and performed on the basis of at least one criterion.

6. Method (100) for handling a manoeuvre request (145) from a first vehicle (20), by way of a control unit (32) of a second vehicle (30), wherein
- a manoeuvre request (145) sent by the first vehicle (20) is received (105) by the control unit (32) of the second vehicle (30),
- static information (150) and dynamic information (160) of the second vehicle (30) are determined and compared (106, 107) against a header (140) of the manoeuvre request received from the first vehicle (20),
- the received manoeuvre request (145) is rated (108) as relevant or irrelevant,
- a manoeuvre request (145) rated as relevant is confirmed (111) to the first vehicle (20),
- **characterized in that** the manoeuvre request is received by the second vehicle (30) in detailed form (145) as an offer of a transaction (113),
- the offer is confirmed or declined (114) by the second vehicle (30),
- confirmation (115) of the offer from the first vehicle (20) by the second vehicle (30) results in a reward, for example in the form of a transaction of a means of payment between the first vehicle (20) and the second vehicle (30), being received by the second vehicle (30) and a requested manoeuvre from the first vehicle (20) being provided or supported (117) by the second vehicle (30),
and **in that** the static information (150) and the dynamic information (160) are used to generate a private key for receiving and/or reading the manoeuvre request (145), a position of the second vehicle (30) called for by the control unit (21) of the first vehicle (20) being taken as a basis for a correct private key being generated by way of the control unit (32) of the second vehicle (30).

7. Method according to Claim 6, wherein a manoeuvre request (145) rated as irrelevant is declined (109), and/or the transaction between the first vehicle (20) and the second vehicle (30) is verified (116) in blockchain-based fashion or performed as a blockchain.

8. Method according to either of Claims 6 and 7, wherein the transaction is performed and/or verified in decentralized fashion in a vehicle-external server unit (60).

9. Control unit (21, 32), wherein the control unit (21, 32) is configured to carry out the method according to one of Claims 1 to 5 or the method according to one of Claims 6 to 8.

## Revendications

1. Procédé (100) permettant d'effectuer une demande de manoeuvre (145) par un appareil de commande (21) d'un premier véhicule (20), dans lequel
- un besoin en communication (101) est constaté par l'évaluation de données de mesure,
- un en-tête (140) avec des informations statiques (150) et des informations dynamiques (160) est généré (103) et est envoyé (104) avec la demande de manoeuvre (145),
- **caractérisé en ce que** la demande de manoeuvre est transmise sous forme détaillée (145) comme une offre d'une transaction (113) du premier véhicule (20) au deuxième véhicule (30),
- en cas de confirmation reçue (115) de l'offre, une manoeuvre demandée est exécutée (117),
et **en ce que** les informations statiques (150) et les informations dynamiques (160) sont mises en aeuvre pour générer une clé privée pour recevoir et/ou lire la demande de manoeuvre (145), dans lequel une clé privée correcte est générée par l'appareil de commande (32) du deuxième véhicule (30) sur la base d'une position du deuxième véhicule (30), exigée par l'appareil de commande (21) du premier véhicule (20),

2. Procédé selon la revendication 1, dans lequel le besoin en communication (101) est constaté par au moins un algorithme ou au moins un réseau neuronal qui évalue des données de mesure provenant de capteurs de véhicule.

3. Procédé selon la revendication 1 ou 2, dans lequel les informations statiques (150) et les informations dynamiques (160) de l'en-tête (140), en particulier du premier véhicule (20) et du deuxième véhicule (30) ne sont satisfaites que par au moins un deuxième véhicule (30) à l'intérieur d'une zone de trafic pertinente (144) en tant que critères de filtre pour ouvrir ou consulter la demande de manoeuvre (145).

4. Procédé selon l'une quelconque des revendications 1 à 3, dans lequel l'offre d'une transaction (113) contient un service (146) du deuxième véhicule (30), par exemple sous la forme d'une manoeuvre effectuée par le deuxième véhicule (30), et une contrepartie (147) du premier véhicule (20), par exemple sous la forme d'une rémunération transmise au deuxième véhicule (30) et est transmise audit au moins un deuxième véhicule (30).

5. Procédé selon l'une quelconque des revendications 1 à 4, dans lequel, dans le cas de plusieurs deuxièmes véhicules (30, 31), respectivement une offre (113) d'une transaction est transmise aux véhicules (30, 31) et une transaction (114) avec un deuxième véhicule (30) des plusieurs véhicules (30, 31) est sélectionnée et effectuée sur la base d'au moins un critère.

6. Procédé (100) permettant de gérer une demande de manoeuvre (145) d'un premier véhicule (20) par un appareil de commande (32) d'un deuxième véhicule (30), dans lequel
- une demande de manoeuvre (145) envoyée par le premier véhicule (20) est reçue (105) par l'appareil de commande (32) du deuxième véhicule (30),
- des informations statiques (150) et des informations dynamiques (160) du deuxième véhicule (30) sont établies et comparées (106, 107) avec un en-tête (140) de la demande de manoeuvre reçue du premier véhicule (20),
- la demande de manoeuvre (145) reçue est évaluée (108) comme étant pertinente ou non pertinente,
- une demande de manoeuvre (145) évaluée comme étant pertinente est confirmée (111) pour le premier véhicule (20),
- **caractérisé en ce que** la demande de manoeuvre est reçue par le deuxième véhicule (30) sous forme détaillée (145) comme une offre de négociation (113),
- l'offre est confirmée ou rejetée (114) par le deuxième véhicule (30),
- lorsque l'offre du premier véhicule (20) est confirmée (115) par le deuxième véhicule (30), une contrepartie, par exemple sous la forme d'une transaction d'un moyen de paiement entre le premier véhicule (20) et le deuxième véhicule (30), est reçue par le deuxième véhicule (30) et une manoeuvre demandée du premier véhicule (20) est autorisée ou prise en charge (117) par le deuxième véhicule (30),
et **en ce que** les informations statiques (150) et les informations dynamiques (160) sont mises en aeuvre pour générer une clé privée pour recevoir et/ou lire la demande de manoeuvre (145), dans lequel une clé privée correcte est générée par l'appareil de commande (32) du deuxième véhicule (30) sur la base d'une position du deuxième véhicule (30), exigée par l'appareil de commande (21) du premier véhicule (20),

7. Procédé selon la revendication 6, dans lequel une demande de manoeuvre (145) évaluée comme étant non pertinente est rejetée (109), et/ou la transaction entre le premier véhicule (20) et le deuxième véhicule (30) est vérifiée (116) à base de chaîne de blocs ou est effectuée sous forme de chaîne de blocs.

8. Procédé selon l'une quelconque des revendications 6 ou 7, dans lequel la transaction est effectuée et/ou vérifiée de manière décentralisée dans une unité de serveur (60) externe au véhicule.

9. Appareil de commande (21, 32), dans lequel l'appareil de commande (21, 32) est conçu pour effectuer le procédé selon l'une quelconque des revendications 1 à 5 ou exécuter le procédé selon l'une quelconque des revendications 6 à 8.
